# EUROPÄISCHE PATENTSCHRIFT

(11) **EP 0 459 293 B1**
(45) Veröffentlichungstag und Bekanntmachung des Hinweises auf die Patenterteilung: **25.01.1995**
(21) Anmeldenummer: 91108300.4
(22) Anmeldetag: 23.05.1991
(51) Int. Cl.: B01D 71/22

(54) **Dialysemembran aus Polysaccharidether**
Polysaccharide ether dialysis membrane
Membrane pour dialyse à base d'éthers de polysaccharides

(30) Priorität: 01.06.1990 DE 4017745
(43) Veröffentlichungstag der Anmeldung: 04.12.1991
(73) Patentinhaber: Akzo Nobel N.V., 6824 BM Arnhem (NL)
(72) Erfinder: Lemke, Horst Dieter, Dr., W-8753 Obernburg (DE); Diamantoglou, Michael, Dr., W-8765 Erlenbach (DE)
(74) Vertreter: Fett, Günter

(56) Entgegenhaltungen:
- EP-A- 0 013 181
- DE-A- 3 524 596
- FR-A- 935 380
- US-A- 2 237 221
- US-A- 2 958 656
- US-A- 3 441 142
- US-A- 4 210 529

## Beschreibung

Die Erfindung betrifft eine Dialysemembran für die Hämodialyse in Form von Flachfolien, Schlauchfolien oder Hohlfäden aus Polysaccharidethern.

An Dialysemembranen für die Hämodialyse werden sehr hohe Anforderungen hinsichtlich der Biocompatibilität gestellt, damit das an den Membranen vorbeifließende Blut möglichst wenig beeinträchtigt wird. Wesentliche Parameter der Biocompatibilität sind dabei Blutgerinnung, Leucopenie und Komplementaktivierung.

Aus der DE-A-35 24 596 ist bereits eine Dialysemembran mit verbesserter Biocompatibilität bekannt, die bereits in der Lage war, Blutgerinnung, Leucopenie und Komplementaktivierung in erheblichem Umfange zu reduzieren und zeichnet sich durch modifizierte Cellulose aus, deren mittlerer Substitutionsgrad 0,02 bis 0,07 beträgt. Vorzugsweise enthält die bekannte Dialysemembran aus modifizierter Cellulose solche modifizierte Cellulose, die eine durch die Formel

Cellulose-R'-X-Y

wiedergegebene Struktur aufweist, wobei
- X: für -NR''- und/oder 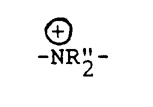 und/oder -S- und/oder -SO- und/oder -SO₂- und/oder 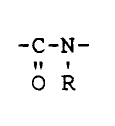 und/oder -CO-O- und/oder -O-,
- Y: für -R und/oder -NR₂ und/oder -Si(OR'')₃ und/oder -SO₃H und/oder -COOH und/oder -PO₃H₂ und/oder 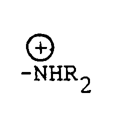 bzw. deren Salze,
- R': für eine Alkylengruppe und/oder Cycloalkylengruppe und/oder Arylengruppe mit insgesamt 1 bis 25 C-Atomen,
- R'': für ein Wasserstoffatom oder R und
- R: für eine Alkylgruppe mit 1 bis 5 C-Atomen und/oder eine Cycloalkylgruppe und/oder Arylgruppe steht.

Neben dem Umstand, daß Dialysemembranen aus synthetischen bzw. natürlichen Polymeren bei ihrem Einsatz in künstlichen Nieren sehr leicht eine Gerinnung des Blutes hervorrufen können, die durch entsprechende medikamentöse Behandlung weitgehend verhindert wird, tritt bei der Dialysebehandlung eines Nierenkranken mit Dialysatoren, die Membranen aus regenerierter Cellulose enthalten, in der ersten Zeit der Dialysebehandlung ein vorübergehender Leukozytenabfall auf. Dieser Effekt wird als Leukopenie bezeichnet.

Leukopenie ist eine Erniedrigung der Leukozytenzahl (weiße Blutkörper) im Blutkreislauf. Die Zahl der weißen Blutkörper beim Menschen beträgt ca. 4000 bis 12000 Zellen/mm³. Die Leukopenie bei der Dialyse ist am stärksten ausgeprägt 15 bis 20 Min. nach Beginn der Behandlung, wobei die Neutrophilen (das sind die mit neutralen oder gleichzeitig mit sauren und basischen Farbstoffen anfärbbaren Leukozyten) fast vollständig verschwinden können. Danach erholt sich die Zahl der Leukozyten innerhalb etwa einer Stunde wieder auf fast den Ausgangswert oder übersteigt diesen. Wird nach Erholung der Leukozyten ein neuer Dialysator angeschlossen, tritt wieder Leukopenie im gleichen Ausmaß ein.

Cellulose-Membranen verursachen eine ausgeprägte Leukopenie. Auch wenn die klinische Bedeutung der Leukopenie wissenschaftlich nicht geklärt ist, besteht doch der Wunsch nach einer Dialysemembran für die Hämodialyse, die den Effekt der Leukopenie nicht zeigt, ohne daß dadurch die anderen sehr erwünschten Eigenschaften von Dialysemembranen aus regenerierter Cellulose beeinträchtigt werden.

Bei der Hämodialyse mittels Membranen aus regenerierter Cellulose hat man neben der Leukopenie auch eine deutliche Komplement-Aktivierung festgestellt. Das Komplement-System innerhalb des Blutserums ist ein komplexes, aus vielen Komponenten bestehendes Plasmaenzym-System, das auf verschiedene Weise der Abwehr von Schädigungen durch eindringende fremde Zellen (Bakterien u.a.) dient. Wenn Antikörper gegen den eindringenden Organismus vorhanden sind, kann komplementspezifisch durch den Komplex der Antikörper mit antigenen Strukturen der Fremdzellen aktiviert werden, anderenfalls erfolgt auf einem Alternativ-Weg durch besondere Oberflächenmerkmale der Fremdzellen die Komplement-Aktivierung. Das Komplement-System beruht auf einer Vielzahl von Plasma-Proteinen. Nach Aktivierung reagieren diese Proteine spezifisch in einer bestimmten Reihenfolge miteinander und am Ende wird ein zellschädigender Komplex gebildet, der die Fremdzelle zerstört.

Aus einzelnen Komponenten werden Peptide freigesetzt, die Entzündungserscheinungen auslösen und gelegentlich auch unerwünschte pathologische Folgen für den Organismus haben können. Es wird angenommen, daß die Aktivierung bei Hämodialysemembranen aus regenerierter Cellulose über den alternativen Weg erfolgt. Objektiv festgestellt werden diese Komplement-Aktivierungen durch eine Bestimmung der Komplement-Fragmente C3a und C5a.

In diesem Zusammenhang wird auf folgende Arbeiten hingewiesen: D.E. Chenoweth et al., Kidney International Vol. 24, Seite 764 ff, 1983 und D.E. Chenoweth, Asaio-Journal Vol. 7, Seite 44 ff, 1984.

Im Rahmen der vorliegenden Erfindung wurde die Komplement-Aktivierung anhand der Fragmente C5a beurteilt. Dazu wurden in vitro 300 ml heparinisiertes Blutplasma über einen Zeitraum von 4 Std. mit einem Plasmafluß von 100 ml/min durch einen Dialysator mit 1 m² effektiver Austauschfläche rezirkuliert. In dem Plasma wurden die C5a-Fragmente mit Hilfe der RIA-Methode (Upjohn-Test) bestimmt. Die relative Komplement-Aktivierung für den jeweiligen Meßzeitpunkt wurde durch Bildung des Verhältnisses der Konzentration zum Zeitpunkt der Probenahme mit dem Anfangswert in Prozent errechnet. Zur Bewertung wurde der Meßwert nach 4 Std. Rezirkulationszeit herangezogen. Flachmembranen werden mit heparinisiertem Blutplasma 3 Stunden inkubiert und anschließend die C5a-Fragmente bestimmt.

Die Erhöhung des beta-2-Mikroglobulinspiegels bei Langzeit-Dialysepatienten wird nach Verwendung von Membranen aus regenerierter Cellulose beobachtet und wird darauf zurückgeführt, daß diese Membranen im Molekularbereich von 1000 bis 20.000 weniger durchlässig sind und die Mikroglobuline bei der Dialyse deshalb nicht in ausreichendem Maße entfernt werden. An die üblichen Membranen aus regenerierter Cellulose adsorbiert sich das beta-2-Mikroglobulin nicht in nennenswertem Umfang. Hierzu aber können in unerwarteter Weise die erfindungsgemäßen Cellulosederivate beitragen.

Der Durchschnittspolymerisationsgrad DP wurde in einer Cuen-Lösung nach DIN 54270 bestimmt.
Der Veretherungsgrad wurde anhand der Analysenergebnisse bestimmt, die für die Substituenten bekannt und typisch sind, beispielsweise Stickstoff nach Kjeldahl, Schwefel nach Schöniger oder Phosphor nach der Molybdatmethode, gegebenenfalls aus der Differenz vor und nach einer Verseifung.

Inzwischen wurde festgestellt, daß es wünschenswert ist, die Heparinadsorption, die insbesondere bei den Polysaccharidethern gemäß der DE-A-35 24 596 in deutlichem Maße auftritt, zu vermeiden. Außerdem wird zur Kostendämpfung eine Mehrfachverwendung der Membranmodule angestrebt, die natürlich nur dann sinnvoll und vertretbar ist, wenn die Module einwandfrei gereinigt und desinfiziert werden können, ohne daß die erwünschten Eigenschaften der Membranen beeinträchtigt werden.

Bei den bisher angewendeten Verfahren zur Vorbereitung einer Wiederverwendung wurden jedoch gerade die für die Biocompatibilität maßgeblichen Parameter deutlich beeinträchtigt und die Dampfsterilisierung führte zu einer Vergilbung der Membranen.

Obwohl bereits Dialysemembranen mit Polysaccharidethern und guten Biocompatibilitätseigenschaften bekannt sind, besteht das Bedürfnis, diese weiter zu verbessern. Aufgabe der Erfindung war es deshalb, bei biocompatiblen Dialysemembranen aus Polysaccharidethern die Adsorption von Heparin weitgehend zu vermeiden und eine Beeinträchtigung durch die Dampfsterilisation und die für eine Wiederverwendung notwendigen Behandlungen zu verhindern.

Gelöst wird die Aufgabe bei einer Dialysemembran gemäß dem Oberbegriff von Anspruch 1 dadurch, daß der Polysaccharidether eine durch die Formel 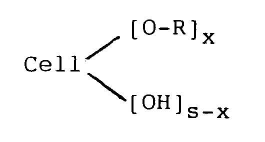
wiedergegebene Struktur aufweist, worin Cell das Gerüst des unmodifizierten Cellulosemoleküls oder des Chitinmoleküls jeweils ohne Hydroxylgruppen ist, s beim unmodifizierten Cellulosemolekül 3 und beim Chitinmolekül 2 beträgt und x dein Veretherungsgrad entspricht, der im Bereich von 0,08 bis (s - 0,4) liegt und worin R ein substituierter oder nicht substituierter Alkyl-, Alkenyl- und/oder Alkinyl- und/oder Cycloalkyl und/oder Cycloalkenyl- und/oder Cycloalkinyl- und/oder Arylalkyl- und/oder Arylalkenyl- und/oder Arylalkinyl- und/oder Bisarylalkyl- und/oder Bisarylalkenyl- und/oder Bisarylalkinyl-Rest mit 5 bis 40 C-Atomen und/oder der Rest einer kondensierten aromatischen Verbindung und/oder der Rest einer heterocyclischen (ggf. substituierten) Verbindung ist.

In den Unteransprüchen sind bevorzugte Ausführungsformen gekennzeichnet. So können durch Substitution der Gruppe R Eigenschaften des Membranmaterials beeinflußt werden, beispielsweise die Löslichkeit in bestimmten Celluloselösungsmitteln. Gemäß einer Ausführungsform sind deshalb solche Polysaccharidether bevorzugt, bei denen der Substituent eine nicht-ionische Gruppe, wie Halogen- und/oder Nitril- und/oder Nitro- und/oder R'O- und/oder R'S- und/oder R'CO- und/oder R'CS- und/oder R'SO- und/oder R'SO₂- und/oder eine Estergruppe ist, wobei R'= H oder R ist.

Die erfindungsgemäßen Dialysemembranen werden durch Regeneration der Polysaccharidether aus Lösungen in wäßrigen oder nichtwäßrigen Celluloselösungen in bekannter Weise gebildet.

In einer anderen bevorzugten Ausführungsform ist der Substituent eine ionische Gruppe, wie Carboxyl- und/oder Phosphonat- und/oder Silicat und/oder Sulfonatgruppe. Bevorzugt werden erfindungsgemäß solche Polysaccharidether, bei denen R einer Benzyl-, Methylbenzyl-, Chlorbenzyl-, Hexyl-, Dodecyl-, Hydroxydodecyl-, Octadecylgruppe, gegebenenfalls substituiert, entspricht.

Durch die Auswahl dieser Reste wird in besonderem Maße die Beeinträchtigung der Dialysemembranen bei der Behandlung zur Wiederverwendung verhindert.

In einer besonderen Ausführungsform der Erfindung beträgt der Veretherungsgrad x = 0,1 bis 0,5. Dieser Bereich ist insbesondere dann von Bedeutung, wenn beispielsweise die Membran aus Cuoxamlösungen oder aus Viskoselösungen regeneriert werden soll. Ebenfalls kommt diesem Bereich eine besondere Bedeutung dann zu, wenn der Rest R unsubstituiert ist.

In einer weiteren Ausführungsform der Erfindung beträgt der Veretherungsgrad x bei einem Chitingerüst (wenn also s = 2 beträgt) 0,5 bis 1,5.

Eine weitere bevorzugte Ausführungsform bei einem Cellulosegerüst besteht darin, daß der Veretherungsgrad x = 0,5 bis 2,0 beträgt. Diese Ausführungsform wird vor allem dann mit Erfolg angewendet, wenn für die Membranbildung im wesentlichen nicht-wässerige Celluloselösungsmittel angewendet werden oder wenn die Veretherung an der bereits geformten Membran erfolgt.

Die Erfindung wird anhand der nachfolgenden Beispiele erläutert.

### Beispiel 1:

In einem 10 l Drais-Mischer wurden 324 g (2 Mol) Linters-Cellulose mit 40 g (1 Mol) Natriumhydroxid, gelöst in 250 ml Wasser, 1 h bei 16 °C alkalisiert. Nach Zusatz von 250 ml i-Propanol und 75,9 g (0,6 Mol) Benzylchlorid wurde das Gemisch 24 h bei 80 °C gerührt. Das Reaktionsprodukt wurde in Ethanol aufgenommen, abgesaugt, nacheinander mit Ethanol, Wasser und Ethanol alkali- und chloridfrei gewaschen und im Vakuumtrockenschrank bei 60 °C getrocknet. Dabei wurden 340,8 g eines Produktes mit einem Veretherungsgrad von x = 0,11 erhalten.

Aus diesem Derivat wurde nach üblicher Verfahrensweise eine 5%ige Cuoxamlösung hergestellt und zu Flachmembranen verarbeitet. Im Vergleich zu unmodifizierter Cellulose-Membran ist die C5a-Aktivierung um 92 % vermindert.

Ein Teil der Membranen wurde bei 121 °C 30 min lang mit Wasserdampf sterilisiert. Auch nach der Dampfbehandlung zeigten die Membranen gegenüber der unmodifizierten Cellulose-Membran eine C5a-Reduktion von 90 %.

Ebenfalls zu keinem Aktivitätsverlust führte eine 15-minütige Behandlung der Membranen mit 1 %iger wässriger Natriumhypochlorit-Lösung bzw. 4 %iger wässriger Peressigsäure-Lösung. Die C5a-Reduktion betrug 91 %.

Die Membranen absorbieren nach der Testvorschrift der Deutschen Kabi Vitrum GmbH, Diagnostika, kein Heparin.

### Beispiel 2:

In einem 10 l Drais-Mischer wurden 324 g (2 Mol) Linters-Cellulose mit 160 g (4 Mol) Natriumhydroxid, gelöst in 300 ml Wasser, 1 h bei 16 °C alkalisiert. Nach Zusatz von 400 ml i-Propanol und 421,8 g (3 Mol) 4-Methylbenzylchlorid wurde das Gemisch 8 h bei 80 °C gerührt. Das Reaktionsprodukt wurde abgesaugt, nacheinander mit Ethanol, Wasser und Ethanol alkali- und chloridfrei gewaschen und im Vakuumtrockenschrank bei 60 °C getrocknet. Dabei wurden 440 g eines Produktes mit einem Veretherungsgrad von x = 0,60 erhalten.

Aus diesem Derivat wurde nach üblicher Verfahrensweise eine Lösung mit 5 % Cellulosederivat, 7 % Lithiumchlorid und 88 % Dimethylacetamid hergestellt und zu Flachmembranen verarbeitet. Im Vergleich zu unmodifizierter Cellulose-Membran ist die C5a-Aktivierung um 95 % vermindert. Die erzielte hohe C5a-Reduktion blieb auch nach der Behandlung der Membranen mit Wasserdampf, wässriger Natriumhypochlorit- bzw. Peressigsäure-Lösung analog Beispiel 1 erhalten. Die Membranen absorbieren ebenfalls kein Heparin.

### Beispiel 3:

In einem 10 l Drais-Mischer wurden 324 g (2 Mol) Linters-Cellulose mit 240 g (6 Mol) Natriumhydroxid, gelöst in 600 ml Wasser, 1 h bei 16 °C alkalisiert. Der Mischung wurden zunächst 4 l Toluol beigemischt und nach dem Abdestillieren des Wassers 2 l Pyridin und 1333,6 g (4 Mol) 1-Bromoctadecan zugesetzt. Anschließend wurde das Gemisch 48 h bei 110 °C gerührt, das Reaktionsprodukt abgesaugt, nacheinander mit Toluol, Ethanol, Wasser und Ethanol alkali- und chloridfrei gewaschen und im Vakuumtrockenschrank bei 60 °C getrocknet. Dabei wurden 390 g eines Produktes mit einem Veretherungsgrad von x = 0,16 erhalten.

Nach üblicher Verfahrensweise wurde eine Lösung mit 5 % Cellulosederivat, 7 % Lithiumchlorid und 88 % Dimethylacetamid hergestellt und zu Flachmembranen verarbeitet. Im Vergleich zu unmodifizierter Cellulose-Membran ist die C5a-Aktivierung um 88 % vermindert. Die Membranen zeigten auch nach Behandlung mit Wasserdampf, wässriger Natriumhypochlorit- oder Peressigsäure-Lösung gegenüber der unmodifizierten Cellulose-Membran eine C5a-Reduktion von 85 %. Sie absorbieren kein Heparin.

### Beispiele 4 - 25:

Analog Beispiel 1, 2 oder 3 wurden die in der Tabelle aufgeführten Cellulosederivate synthetisiert. Daraus nach bekannten Verfahren hergestellte Membranen zeigten ebenfalls hervorragende Biokompatibilitäts- und Stabilitätseigenschaften.

### Beispiel 26:

40,5 g (0,25 Mol) Linters-Cellulose wurden mit 1 kg 20 %iger wässriger Natriumhydroxid-Lösung 3 h bei 20 °C alkalisiert. Dann wurde die Alkalicellulose bis zu einem Feuchtgewicht von 100 g abgepreßt, in 1 l Toluol aufgenommen und mit 92 g (0,25 Mol) Epoxidodecan 48 h bei 100 °C umgesetzt. Das Reaktionsprodukt wurde abgesaugt, nacheinander mit Ethanol, Wasser und Ethanol alkalifrei gewaschen und bei 60 °C im Vakuumtrockenschrank getrocknet. Daraus nach bekannter Verfahrensweise hergestellte Membranen zeigten gegenüber der unmodifizierten Cellulose-Membran eine C5a-Reduktion von 70 %. Die Membranen absorbieren kein Heparin.

**Tabelle**

| Beisp. Nr. | Veretherungsagenz | Molverhältnis Cellulose : Vereth.-agenz | x | C₅ₐ-Red % |
|---|---|---|---|---|
| 4 | Benzylchlorid | 1 : 0,25 | 0,10 | 85 |
| 5 | Benzylchlorid | 1 : 0,40 | 0,16 | 93 |
| 6 | Benzylchlorid | 1 : 0,50 | 0,20 | 94 |
| 7 | Benzylchlorid | 1 : 0,80 | 0,30 | 96 |
| 8 | Benzylchlorid | 1 : 1,00 | | 97 |
| 9 | Benzylchlorid | 1 : 1,50 | | 96 |
| 10 | Benzylchlorid | 1 : 2,50 | 0,80 | 98 |
| 11 | Benzylchlorid | 1 : 4,50 | 1,63 | 99 |
| 12 | Benzylchlorid | 1 : 6,00 | 2,55 | 90 |
| 13 | 4-Methylbenzylchlorid | 1 : 0,50 | 0,15 | 80 |
| 14 | 4-Methylbenzylchlorid | 1 : 1,00 | | 88 |
| 15 | 4-Methylbenzylchlorid | 1 : 2,00 | | 96 |
| 16 | 4-Methylbenzylchlorid | 1 : 3,00 | | 93 |
| 17 | 2-Methylbenzylchlorid | 1 : 1,00 | | 85 |
| 18 | 4-Chlorbenzylchlorid | 1 : 0,35 | 0,11 | 83 |
| 19 | 4-Chlorbenzylchlorid | 1 : 0,50 | 0,12 | 85 |
| 20 | 4-Chlorbenzylchlorid | 1 : 0,75 | 0,13 | 88 |
| 21 | 4-Chlorbenzylchlorid | 1 : 1,00 | | 96 |
| 22 | 4-Chlorbenzylchlorid | 1 : 1,50 | 0,25 | 94 |
| 23 | 4-Chlorbenzylchlorid | 1 : 2,00 | | 89 |
| 24 | 1-Bromhexan | 1 : 3,00 | 0,40 | 65 |
| 25 | 1-Bromdodecan | 1 : 3,00 | 0,20 | 70 |

## Patentansprüche

1. Dampfsterilisierbare, biocompatible, wiederverwendbare Dialysemembran für die Hämodialyse in Form von Flachfolien, Schlauchfolien oder Hohlfäden aus Polysaccharidethern, dadurch gekennzeichnet, daß der Polysaccharidether eine durch die Formel 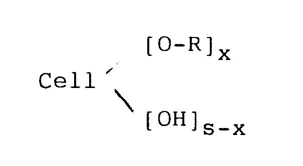 wiedergegebene Struktur aufweist, worin Cell das Gerüst des unmodifizierten Cellulosemoleküls oder des Chitinmoleküls jeweils ohne Hydroxylgruppen ist, s beim unmodifizierten Cellulosemolekül 3 und beim Chitinmolekül 2 beträgt und x dem Veretherungsgrad entspricht, der im Bereich von 0,08 bis (s - 0,4) liegt und worin R ein substituierter oder nicht-substituierter Alkyl-, Alkenyl- und/oder Alkinyl- und/oder Cycloalkyl und/oder Cycloalkenyl- und/oder Cycloalkinyl- und/oder Arylalkyl- und/oder Arylalkenyl- und/oder Arylalkinyl- und/oder Bisarylalkyl- und/oder Bisarylalkenyl- und/oder Bisarylalkinyi-Rest mit 5 bis 40 C-Atomen und/oder der Rest einer kondensierten aromatischen Verbindung und/oder der Rest einer heterocyclischen Verbindung ist.

2. Dialysemembran nach Anspruch 1, dadurch gekennzeichnet, daß der Substituent eine nicht-ionische Gruppe, wie Halogen- und/oder Nitril- und/oder Nitro- und/oder R'O- und/oder R'S- und/oder R'CO- und/oder R'CS- und/oder R'SO- und/oder R'SO₂- und/oder eine Estergruppe ist, wobei R'= H oder R ist.

3. Dialysemembran nach Anspruch 1, dadurch gekennzeichnet, daß der Substituent eine ionische Gruppe, wie Carboxyl- und/oder Phosphonat- und/oder Silicat- und/oder Sulfonatgruppe ist.

4. Dialysemembran nach einem oder mehreren der Ansprüche 1 bis 3, dadurch gekennzeichnet, daß R einer Benzyl-, Methylbenzyl-, Chlorbenzyl-, Hexyl-, Dodecyl-, Hydroxydodecyl-, Octadecylgruppe, gegebenenfalls substituiert, entspricht.

5. Dialysemembran nach einem oder mehreren der Ansprüche 1 - 4, dadurch gekennzeichnet, daß x = 0,1 bis 0,5 beträgt.

6. Dialysemembran nach einem oder mehreren der Ansprüche 1 bis 4, dadurch gekennzeichnet, daß s = 2 und x = 0,5 bis 1,5 beträgt.

7. Dialysemembran nach einem oder mehreren der Ansprüche 1 bis 4, dadurch gekennzeichnet, daß s = 3 und x = 0,5 bis 2,0 beträgt.

## Claims

1. Steam-sterilisable, biocompatible, reusable dialysis membrane for haemodialysis in the form of flat films, tubular films or hollow fibres made from polysaccharide ethers, characterised in that the polysaccharide ether has a structure represented by the formula 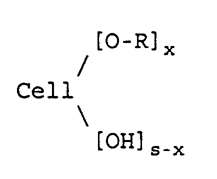 in which Cell is the skeleton of the unmodified cellulose molecule or chitin molecule, in each case without hydroxyl groups, s is 3 in the unmodified cellulose molecule and 2 in the chitin molecule and x denotes the degree of etherification, which is within the range from 0.08 to (s - 0.4) and in which R is a substituted or unsubstituted alkyl, alkenyl and/or alkynyl and/or cycloalkyl and/or cycloalkenyl and/or cycloalkynyl and/or arylalkyl and/or arylalkenyl and/or arylalkynyl and/or bisarylalkyl and/or bisarylalkenyl and/or bisarylalkynyl residue with 5 to 40 C atoms and/or the residue of a condensed aromatic compound and/or the residue of a heterocyclic compound.

2. Dialysis membrane according to claim 1, characterised in that the substituent is a nonionic group, such as a halogen and/or nitrile and/or nitro and/or R'O- and/or R'S- and/or R'CO- and/or R'CS- and/or R'SO- and/or R'SO₂- and/or an ester group, wherein R' = H or R.

3. Dialysis membrane according to claim 1, characterised in that the substituent is an ionic group, such as a carboxyl and/or phosphonate and/or silicate and/or sulphonate group.

4. Dialysis membrane according to one or more of claims 1 to 3, characterised in that R denotes an optionally substituted benzyl, methylbenzyl, chlorobenzyl, hexyl, dodecyl, hydroxydodecyl, octadecyl group.

5. Dialysis membrane according to one or more of claims 1 - 4, characterised in that x = 0.1 to 0.5.

6. Dialysis membrane according to one or more of claims 1 to 4, characterised in that s = 2 and x = 0.5 to 1.5.

7. Dialysis membrane according to one or more of claims 1 to 4, characterised in that s = 3 and x = 0.5 to 2.0.

## Revendications

1. Membrane de dialyse réutilisable, biocompatible, stérilisable à la vapeur pour l'hémodialyse se présentant sous forme de feuilles planes, de feuilles tubulaires ou de fibres creuses en éthers de polysaccharides, caractérisée en ce que l'éther de polysaccharide a un structure répondant à la formule 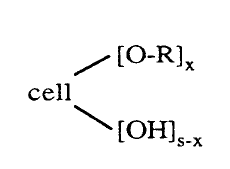 dans laquelle *cell* représente le squelette de la molécule de cellulose non modifiée ou de la molécule de chitine sans les groupes OH, s est égal à 3 pour une molécule de cellulose non modifiée et égal à 2 pour une molécule de chitine, et x correspond au taux d'éthérification, compris entre 0,08 et (s-0,4) et R représente un résidu alkyle, alcényle et/ou alcinyle et/ou cycloalkyle et/ou cycloalcényle et/ou cycloalcinyle et/ou arylalkyle et/ou arylalcényle et/ou arylalcinyle et/ou bisarylalkyle et/ou bisarylalcényle et/ou bisarylalcinyle, substitué ou non, comportant de 5 à 40 atomes de carbone et/ou le résidu d'un composé aromatique condensé et/ou le résidu d'un composé hétérocyclique.

2. Membrane de dialyse conforme à la revendication 1, caractérisée en ce que le substituant est un groupe non ionique, comme les résidus halogéno et/ou nitrile et/ou nitro et/ou R'O et/ou R'S et/ou R'CO et/ou R'CS et/ou R'SO et/ou R'SO₂ et/ou ester, où R' représente un atome d'hydrogène ou un groupe R.

3. Membrane de dialyse conforme à la revendication 1, caractérisée en ce que le substituant est un groupe ionique, tels qu'un résidu carboxyle et/ou phosphonate et/ou silicate et/ou sulfonate.

4. Membrane de dialyse conforme à une ou plusieurs des revendications 1 à 3, caractérisée en ce que R représente un groupe benzyle, méthylbenzyle, chlorobenzyle, hexyle, dodécyle, hydroxydodécyle, octadécyle pouvant être substitué.

5. Membrane de dialyse conforme à une ou plusieurs des revendications 1 à 4, caractérisée en ce que x est compris entre 0,1 et 0,5.

6. Membrane de dialyse conforme à une ou plusieurs des revendications 1 à 4, caractérisée en ce que s est égal à 2 et x est compris entre 0,5 et 1,5.

7. Membrane de dialyse conforme à une ou plusieurs des revendications 1 à 4, caractérisée en ce que s est égal à 3 et x est compris entre 0,5 et 2,0.
